# EUROPEAN PATENT APPLICATION

(11) **EP 4 696 657 A1**
(43) Date of publication of application: **18.02.2026**
(21) Application number: 25187145.5
(22) Date of filing: 03.07.2025
(51) Int. Cl.: C01G 53/50, H01M 4/04, H01M 4/131, H01M 4/1391, H01M 4/36, H01M 4/505, H01M 10/052, H01M 4/02, H01M 4/525

(54) **CATHODE FOR LITHIUM SECONDARY BATTERY, LITHIUM SECONDARY BATTERY INCLUDING THE SAME AND METHOD OF PREPARING CATHODE ACTIVE MATERIAL FOR LITHIUM SECONDARY BATTERY**

(30) Priority: 29.07.2024 KR 20240100534
(71) Applicant: SK On Co., Ltd., Seoul 03161 (KR)
(72) Inventor: PARK, Young Uk, 34124 Daejeon (KR); KIM, Seung Hyun, 34124 Daejeon (KR); KANG, Hyun Sung, 34124 Daejeon (KR); KANG, Min Suk, 34124 Daejeon (KR); DO, Ji Yae, 34124 Daejeon (KR); BEAK, Min Cheol, 34124 Daejeon (KR)
(74) Representative: Prüfer & Partner mbB Patentanwälte · Rechtsanwälte

(57) **Abstract**

A cathode for a lithium secondary battery, a lithium secondary battery including the same, and a method of preparing a cathode active material for a lithium secondary battery are provided. The cathode for a lithium secondary battery includes a cathode current collector, and a cathode active material layer disposed on the cathode current collector and including first cathode active material particles in the form of secondary particles and second cathode active material particles in the form of single particles. Each of the first cathode active material particles and the second cathode active material particles includes a lithium-manganese-containing oxide. A ratio of the number of moles of lithium to the number of moles of elements excluding lithium and oxygen in the lithium-manganese-containing oxide, represented by Li/Me, is 1.1 to 1.5. A weight ratio of the first cathode active material particles to the total weight of the first and second cathode active material particles is greater than 0.5 and less than 0.9.

## Description

### [BACKGROUND OF THE INVENTION]

### 1. Field of the Invention

The disclosure of the present application relates to a cathode for a lithium secondary battery, a lithium secondary battery including the same, and a method of preparing a cathode active material for a lithium secondary battery. More specifically, the present disclosure relates to a cathode for a lithium secondary battery including lithium metal oxide particles as a cathode active material, a lithium secondary battery including the cathode, and a method of preparing the cathode active material.

### 2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

A lithium metal oxide may be used as a cathode active material of the lithium secondary battery. As the application scope of lithium secondary batteries continues to expand, more stable electrical characteristics, higher capacity, and higher rate characteristics are required. Accordingly, it is necessary to develop a cathode active material that exhibits high chemical and crystal stability and can provide improved electrical characteristics.

### [SUMMARY OF THE INVENTION]

An object of the present disclosure is to provide a cathode for a lithium secondary battery exhibiting improved structural stability and electrical characteristics.

Another object of the present disclosure is to provide a lithium secondary battery exhibiting improved structural stability and electrical characteristics.

Another object of the present disclosure is to provide a method of preparing a cathode active material for a lithium secondary battery exhibiting improved structural stability and electrical characteristics.

A cathode for a lithium secondary battery according to exemplary embodiments of the present disclosure includes: a cathode current collector; and a cathode active material layer disposed on the cathode current collector and including first cathode active material particles in the form of secondary particles and second cathode active material particles in the form of single particles. Each of the first cathode active material particles and the second cathode active material particles includes a lithium-manganese-containing oxide, and a ratio of the number of moles of lithium to the number of moles of elements excluding lithium and oxygen in the lithium-manganese-containing oxide, represented by Li/Me, is 1.1 to 1.5. A weight ratio of the first cathode active material particles to the total weight of the first and second cathode active material particles is greater than 0.5 and less than 0.9.

In some embodiments, the weight ratio of the first cathode active material particles to the total weight of the first and second cathode active material particles may be 0.55 to 0.85.

In some embodiments, each of the first cathode active material particles and the second cathode active material particles may include a lithium-nickel-manganese-containing oxide in which a molar ratio of manganese (Mn) is greater than that of nickel (Ni).

In some embodiments, the Li/Me ratio may be 1.15 to 1.5.

In some embodiments, the Li/Me ratio may be 1.2 to 1.5.

In some embodiments, a median particle diameter (D50) of the first cathode active material particles may be greater than that of the second cathode active material particles.

In some embodiments, the first cathode active material particles may have a median particle diameter (D50) of 8 µm to 20 µm, and the second cathode active material particles may have a median particle diameter (D50) of 1 µm to 7 µm.

In some embodiments, the lithium-manganese-containing oxide may further contain cobalt in a molar ratio of 0 to 0.05 among the elements excluding oxygen.

In some embodiments, an I(003)/I(006) peak intensity ratio measured from a surface of the cathode active material layer by X-ray diffraction (XRD) analysis may be 50 to 80. I(003) may be a peak intensity of a (003) plane measured by the XRD analysis, and I(006) may be a peak intensity of a (006) plane measured by the XRD analysis.

In some embodiments, I(003) and I(006) may be the peak intensities of the (003) plane and the (006) plane, respectively, in the X-ray diffraction pattern of the cathode active material layer, measured after forming a coin half-cell including the cathode for a lithium secondary battery and a lithium counter electrode, and performing two charge and discharge cycles on the coin half-cell each in a voltage range of 2 V to 4.6 V.

In some embodiments, the I(003)/I(006) peak intensity ratio may be 55 to 75.

In some embodiments, the lithium-manganese-containing oxide may have a chemical structure or a crystal structure represented by Formula 1 below.

[Formula 1] Liₐ[MₓNi_{y}Mn_{z}]O_{b}

(In Formula 1, M includes at least one element of Co, Ca, Mg, V, Ti, Al, Fe, Ru, Zr, W, Sn, Sr, Ir, Nb, Mo, Cu, Zn, Cr, Ga and Bi, and 0≤x≤0.9, 0≤y≤0.9, x+y>0, 0.1≤z≤0.9, 1.8≤a+x+y+z≤2.2, and 1.1≤a/(x+y+z)≤1.5, 1.8≤b≤2.2).

A lithium secondary battery according to exemplary embodiments of the present disclosure may include: the cathode for a lithium secondary battery; and an anode disposed opposite to the cathode.

In a method of preparing a cathode active material for a lithium secondary battery, a mixture of an active material precursor and a lithium source is prepared. A first calcination is performed on the mixture at a temperature of 900 °C or higher to form preliminary active material particles. A second calcination is performed on the preliminary active material particles at a temperature lower than that of the first calcination and for a longer duration to form cathode active material particles.

In some embodiments, the temperature of the second calcination may be 750 °C to 880 °C.

The cathode active material for a lithium secondary battery according to embodiments of the present disclosure may include first cathode active material particles having a Mn-rich composition and a secondary particle form, and second cathode active material particles having a single particle form. The specific surface area of the cathode active material may be decreased by the second cathode active material particles, thereby suppressing a voltage drop in the secondary battery. In addition, the resistance of the cathode may be reduced by the first cathode active material particles, thereby improving the rate characteristics of the secondary battery.

According to exemplary embodiments, the cathode active material particles may contain only a small amount of cobalt among the total transition metals, or may be free of cobalt. Therefore, a high-quality cathode active material may be provided at low cost. In addition, the operating voltage of the lithium secondary battery may be increased by adopting a lithium-rich composition, and a high-Ni composition may be readily introduced to implement high-capacity characteristics.

According to embodiments of the present disclosure, the cathode active material particles may be prepared through a multi-step calcination process. Through the multi-step calcination process, the crystallinity of the cathode active material particles may be improved, and high-rate and low-resistance characteristics may be stably maintained even during repeated charge and discharge cycles.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic cross-sectional view illustrating a cathode for a lithium secondary battery according to exemplary embodiments;
FIG. 2 is a flowchart describing a method of preparing a cathode active material for a lithium secondary battery according to exemplary embodiments; and
FIGS. 3 and 4 are schematic plan and cross-sectional views illustrating a lithium secondary battery according to exemplary embodiments, respectively.

### [DETAILED DESCRIPTION OF THE INVENTION]

The embodiments of the present disclosure provide a cathode including lithium metal oxide particles as a cathode active material and a lithium secondary battery including the cathode.

The cathode and lithium secondary battery according to embodiments of the present disclosure may be widely applied in green technology fields, such as electric vehicles, battery charging stations, as well as solar power generation, wind power generation, and the like, which use the batteries. In addition, the lithium secondary battery according to embodiments of the present disclosure may be used in eco-friendly electric vehicles, hybrid vehicles, and the like, which are aimed at mitigating climate change by reducing air pollution and greenhouse gas emission.

Hereinafter, the embodiments of the present disclosure will be described in detail. However, these embodiments are merely examples, and the present disclosure is not limited to the specific embodiments described as example.

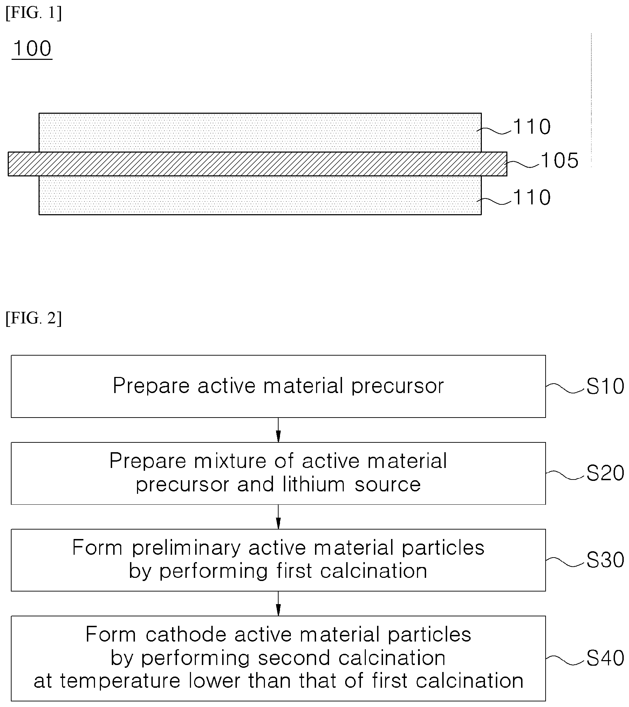

FIG. 1 is a schematic cross-sectional view illustrating a cathode for a lithium secondary battery according to exemplary embodiments.

Referring to FIG. 1, a cathode 100 for a lithium secondary battery (hereinafter, also abbreviated as a cathode) may include a cathode current collector 105 and a cathode active material layer 110 formed on at least one surface of the cathode current collector 105.

In some embodiments, the cathode active material layer 110 may be respectively formed on both surfaces (upper and lower surfaces) of the cathode current collector 105.

The cathode active material layer 110 may include a cathode active material including lithium metal oxide particles.

For example, a cathode slurry may be prepared by mixing the cathode active material with a binder, a conductive material, and/or a dispersant in a solvent, followed by stirring the same. The prepared cathode slurry may be applied to the cathode current collector 105, then dried and roll-pressed to prepare the cathode 100.

The cathode current collector 105 may include stainless steel, nickel, aluminum, titanium or an alloy thereof. The cathode current collector may also include aluminum or stainless steel having a surface treated with carbon, nickel, titanium or silver. For example, the cathode current collector 105 may have a thickness of 10 to 50 µm.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), polyacrylic acid-based binder, poly(3,4-ethylenedioxythiophene, PEDOT)-based binder and the like. In one embodiment, a PVDF-based binder may be used as the cathode binder.

The conductive material may be added to enhance the conductivity and/or the mobility of lithium ions or electrons. For example, non-limiting examples of the conductive material may include carbon-based conductive materials such as graphite, carbon black, acetylene black, Ketjen black, graphene, carbon nanotubes (CNTs), vapor-grown carbon fibers (VGCFs), carbon fibers, and/or metal-based conductive materials, including perovskite materials, such as tin, tin oxide, titanium oxide, LaSrCoO₃, and LaSrMnO₃.

According to exemplary embodiments, the cathode active material layer 110 may have a density (electrode density or slurry density) of 2.8 g/cc or more, and in one embodiment, 3.0 g/cc or more. For example, the cathode active material layer 110 may have a density of 3.0 g/cc to 4.0 g/cc, or 3.0 g/cc to 3.5 g/cc.

Within the above density range, cracking of particles may be prevented, and the enhanced mechanical properties of the lithium metal oxide particles may be sufficiently achieved at the unit of the active material layer.

The cathode active material may include first cathode active material particles and second cathode active material particles, each of which includes a lithium metal oxide. The first cathode active material particles and the second cathode active material particles may have a Mn-rich composition with an increased manganese (Mn) content.

The first and second cathode active material particles may include a lithium-manganese-containing oxide or a lithium-nickel-manganese-containing oxide. In exemplary embodiments, the first and second cathode active material particles may include a lithium-manganese-containing oxide or a lithium-nickel-manganese-containing oxide, respectively, in each of which the content (molar ratio) of manganese (Mn) is greater than that of nickel (Ni).

In exemplary embodiments, the first cathode active material particles and the second cathode active material particles may each have a chemical structure or a crystal structure represented by Formula 1 below.

[Formula 1] Liₐ[MₓNi_{y}Mn_{z}]O_{b}

In Formula 1 above, M may include at least one element of Co, Ca, Mg, V, Ti, Al, Fe, Ru, Zr, W, Sn, Sr, Ir, Nb, Mo, Cu, Zn, Cr, Ga and Bi.

In Formula 1, the relationship among a, b, x, y and z may satisfy 0≤x≤0.9, 0≤y≤0.9, x+y>0, 0.1≤z≤0.9, 1.8≤a+x+y+z≤2.2, 1.1≤a/(x+y+z)≤1.5, or 1.8≤b≤2.2.

In some embodiments, in Formula 1, a may satisfy 1<a<1.3, 1<a<1.2, 1<a<1.19, or 1<a<1.18.

In some embodiments, in Formula 1, y may satisfy 0.1≤y≤0.5, 0.2≤y≤0.5, or 0.2≤y≤0.4.

In some embodiments, in Formula 1, z may satisfy 0.3≤z≤0.8, 0.3≤z≤0.7, 0.4≤z≤0.7, 0.4≤z≤0.6, 0.5≤z≤0.7, 0.5≤z≤0.65, or 0.5≤z≤0.6.

In some embodiments, the mole fraction of manganese based on the all elements excluding lithium and oxygen in the lithium-manganese-containing oxide may be 0.5 to 0.75. In Formula 1, the relationship among x, y and z may satisfy 0.5≤z/(x+y+z)≤0.75, or 0.25≤(x+y)/(x+y+z)≤0.5.

In one embodiment, the relationship among x, y and z may satisfy 0.55≤z/(x+y+z)≤0.75, 0.55≤z/(x+y+z)≤0.7, 0.6≤z/(x+y+z)≤0.75, or 0.6≤z/(x+y+z)≤0.7.

In some embodiments, in Formula 1, x may satisfy 0≤x≤0.05, 0≤x≤0.03, 0≤x≤0.02, or 0≤x≤0.01.

In some embodiments, the mole fraction of cobalt based on the all elements excluding lithium and oxygen in the lithium-manganese-containing oxide may be 0 to 0.05, or 0 to 0.02. For example, the lithium-manganese-containing oxide may be substantially free of cobalt.

In some embodiments, In Formula 1 above, b may satisfy 1.9≤b≤2.1, or 1.95≤b≤2.05.

The lithium-manganese-containing oxide represented by Formula 1 above may be provided as over-lithiated oxide particles capable of providing increased discharge capacity. In some embodiments, the lithium-manganese-containing oxide may be a composite of an over-lithiated phase oxide, such as Li₂MnO₃, and a layered structure oxide, such as an NCM-based cathode active material. Accordingly, the lithium-manganese-containing oxide may provide improved crystal structure stability and long-term cycle life characteristics compared to an active material including only an over-lithiated phase oxide, such as Li₂M_{I}O₂ (wherein M_{I} may include Ni, Co, Fe, Mn, Zn, Mg, Ca, Cu, etc.), Li₂M_{II}O₃ (wherein M_{II} may include Mn, Sn, Mo, Ru, Ir, etc.).

The chemical structure represented by Formula 1 above indicates the bonding relationship among elements included in the structure of the active material particle, and does not exclude the presence of other additional elements. Formula 1 is provided to represent the bonding relationship among the main active elements, and should be understood as encompassing the incorporation or substitution of additional elements.

In some embodiments, the lithium-manganese-containing oxide may further include a coating material or a doping material containing a coating element or a doping element. The coating element or doping element may be Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr.

The coating element or doping element may be present on the surface of the active material particles, or may penetrate through the particle surface to become incorporated into the bonding structure represented by Formula 1.

In some embodiments, the coating material may form a coating layer having a sea-type morphology or a coating layer having an island-type morphology.

In some embodiments, the content of the coating element in the active material particles may be 500 to 8,000 ppm, 1,000 to 8,000 ppm, or 1,500 to 8,000 ppm based on the total weight of all elements excluding lithium and oxygen. Within the above range, a decrease in initial capacity and an increase in resistance of the lithium secondary battery may be prevented, and a voltage drop in the lithium secondary battery may be further suppressed.

In some embodiments, the coating material may be formed by a dry coating method or a wet coating method. For example, the active material particles and a coating source may be dry-mixed or wet-mixed and heat-treated (e.g., calcined or dried) to form the coating material on the surface of the active material particles.

The composition of the active material particles represented by Formula 1 may be analyzed by inductively coupled plasma (ICP) analysis.

As described above, the first and second cathode active material particles may have a cobalt-less or cobalt-free composition in which the cobalt content is reduced. By decreasing the content of cobalt, which is relatively expensive, the manufacturing cost of the cathode active material may be reduced.

In addition, the content of manganese may be relatively increased, thereby enhancing the structural and crystal stability of the cathode active material. The increased content of Mn may improve the cycle life stability and capacity retention characteristics.

The first and second cathode active material particles may have a Li-excess or over-lithiated oxide (OLO) composition in which the lithium content is relatively increased.

According to embodiments of the present disclosure, a ratio (Li/Me) of the number of moles of lithium to the number of moles of elements excluding lithium and oxygen included in the first and second cathode active material particles or the lithium metal oxide may be 1.1 to 1.5.

If the Li/Me ratio is less than 1.1, the capacity enhancement effect by the OLO composition may not be sufficiently achieved. If the Li/Me ratio exceeds 1.5, the crystal stability may be degraded, thereby resulting in a voltage drop during repeated charge and discharge cycles.

In some embodiments, the Li/Me ratio may be greater than 1.1 and less than or equal to 1.5. In some embodiments, the Li/Me ratio may be 1.15 to 1.5, 1.2 to 1.5, 1.15 to 1.4, or 1.2 to 1.4. Within the above range, the capacity enhancement and crystal stability by the OLO composition may be more efficiently achieved.

The theoretical capacity of the battery by the cathode active material may be increased by introducing the above-described OLO (or Mn-rich) particles. For example, the OLO particles may be activated by applying a voltage of 4.4 V (vs. Li/Li⁺) or higher (e.g., 4.4 V to 4.8 V) to the OLO particles (see Scheme 1-1 below). Alternatively, the OLO particles may be activated by charging and discharging a lithium secondary battery including the OLO particles at a voltage of 4.4 V or higher or 4.5 V (vs. Li/Li⁺) or higher (see Schemes 1-1 and 1-2 below).

In one embodiment, the activated particles may include a domain derived from a Li₂MnO₃ domain among the over-lithiated oxide particles.

In some embodiments, the domain derived from the Li₂MnO₃ domain may include at least one of MnO₂, Mn₂O₄, LiMnO₂, LiMn₂O₄ and Li₂Mn₂O₄.

For example, at least a portion of Li₂MnO₃ among the OLO particles may be converted into MnO₂ and LiMnO₂ by the activation, as shown in Scheme 1-1 and Scheme 1-2 below. The MnO₂ and LiMnO₂ may reversibly intercalate and deintercalate lithium ions, as shown in Scheme 2 below. Accordingly, the OLO particles may provide an increased capacity.

[Scheme 1-1] (Charge) Li₂MnO₃ → MnO₂ + 2Li⁺ + 1/2O₂ + 2e⁻

[Scheme 1-2] (Discharge) MnO₂ + Li⁺ + e⁻ → LiMnO₂

[Scheme 2] (Charge) LiMnO₂ → MnO₂ + Li⁺ + e⁻(Discharge) MnO₂ + Li⁺ + e⁻ → LiMnO₂

In some embodiments, LiMnO₂ among the activated particles may further react to be converted into Mn₂O₄, LiMn₂O₄ or Li₂Mn₂O₄.

As described above, by reducing or removing the Co content, sufficient theoretical capacity may be ensured while decreasing the cost of the cathode active material.

However, manganese (Mn) included in the cathode active material particles initially exists in a stable Mn⁴⁺ state, but may be reduced to a Mn³⁺ state by activation at a high voltage of 4.4 V or higher, or 4.5 V or higher. Accordingly, a voltage drop may occur during repeated charge and discharge cycles, which may lead to a decrease in energy density. In addition, manganese dissolution or precipitation may also occur depending on the Mn-rich composition.

In addition, during repeated charge and discharge cycles, the introduction of the OLO composition may cause instability in a metal layer where lithium or the transition metal is located. Accordingly, the cycle life stability of the cathode active material may be degraded.

However, according to embodiments of the present disclosure, lithium metal oxide particles having a single particle form and a Mn-rich composition with improved crystal characteristics may be used as the second cathode active material particles. Since the second cathode active material particles have the single particle form, they may have a smaller specific surface area compared to the active material particles having a secondary particle form. In addition, more stable crystal characteristics may be maintained through the above-described multi-step process. Therefore, voltage drop, manganese dissolution and precipitation, etc. caused by the chemical instability of manganese (Mn) described above may be suppressed or reduced.

According to embodiments of the present disclosure, the first cathode active material particles may have a secondary particle form.

As used herein, the term "secondary particle" may refer to a form in which a plurality of primary particles are aggregated and substantially merged into a single particle. The term "single particle" as used herein may refer to a form that excludes the secondary particle structure. For example, a form in which a single primary particle exists as a substantially independent active material particle may be referred to as a "single particle."

For example, 10 or more, 20 or more, 30 or more, 40 or more, 50 or more, or 100 or more primary particles may be aggregated within a single secondary particle. For example, each of the primary particles included within a single secondary particle may have a particle size of less than 1 µm, 900 nm or less (e.g., 50 nm to 900 nm, 100 nm to 900 nm), 800 nm or less, 600 nm or less, or 500 nm or less.

In some embodiments, a plurality of single particles (e.g., less than 10 single particles) may exist in a form in which they are adjacent to and adhered to one another (e.g., in a scanning electron microscope (SEM) cross-sectional image of the cathode active material layer). Such a form is not excluded from the definition of the single particle form.

The cathode active material according to embodiments of the present disclosure may include a plurality of the first cathode active material particles in the form of secondary particles, and a plurality of the second cathode active material particles in the form of single particles.

The first cathode active material particles may be included as large-diameter particles, and the second cathode active material particles may be included as small-diameter particles. As described above, the introduction of the second cathode active material particles in the form of single particles may reduce the specific surface area of the cathode active material and prevent voltage drop. However, active material particles in the form of single particles may exhibit relatively high resistance, which may degrade the output and rate characteristics of the secondary battery.

According to embodiments of the present disclosure, the first cathode active material particles having a secondary particle form and a relatively large particle size may be used together with the second cathode active material particles. Therefore, the overall resistance of the cathode active material may be reduced, and voltage drop may be suppressed.

In some embodiments, the first cathode active material particles may have a median particle diameter (D50) of 8 µm to 20 µm. In some embodiments, the first cathode active material particles may have a median particle diameter (D50) of 9 µm to 18 µm, or 10 µm to 15 µm.

In some embodiments, the second cathode active material particles may have a median particle diameter (D50) of 1 µm to 7 µm. In some embodiments, the first cathode active material particles may have a median particle diameter (D50) of 1 µm to 5 µm, or 1 µm to 4 µm.

Within the above particle diameter range, prevention of voltage drop by the second cathode active material particles and reduction in resistance or improvement of rate characteristics by the first cathode active material particles may be more implemented.

As used herein, the term "median particle diameter (D50)" may refer to the particle diameter corresponding to 50% in the cumulative volume-based particle size distribution. The cumulative volume-based particle size distribution may be measured using a laser diffraction method. For example, the cathode active material particles may be dispersed in a dispersion solvent and introduced into a commercially available laser diffraction particle size analyzer (e.g., Microtrac MT 3000) to measure the median particle diameter.

As described above, the cathode active material may exhibit a bi-modal distribution formed by the first cathode active material particles and the second cathode active material particles. In the bi-modal distribution, two distinct particle size peaks corresponding to the median particle diameter of the first cathode active material particles and the median particle diameter of the second cathode active material particles in the cumulative volume-based particle size distribution may be clearly observed.

The content of the first cathode active material particles based on the total weight of the cathode active material may be greater than that of the second cathode active material particles.

According to embodiments of the present disclosure, the weight ratio of the first cathode active material particles to the total weight of the first and second cathode active material particles may be greater than 0.5 and less than 0.9.

When the weight ratio of the first cathode active material particles is 0.5 or less, the output and rate characteristics may deteriorate due to an increase in the resistance of the cathode active material layer 110. When the weight ratio of the first cathode active material particles is 0.9 or more, a significant voltage drop may occur in the secondary battery.

In some embodiments, the weight ratio of the first cathode active material particles may be 0.55 to 0.85. In one embodiment, the weight ratio of the first cathode active material particles may be 0.55 to 0.8, 0.6 to 0.8, or 0.6 to 0.7.

Within the above weight ratio range, the effect of preventing voltage drop by the second cathode active material particles and the effect of reducing resistance by the first cathode active material particles may be more efficiently implemented.

According to embodiments of the present disclosure, a ratio of the peak intensity of a (003) plane to that of a (006) plane, defined as I(003)/I(006), measured on the surface of the cathode active material layer 110 by X-ray diffraction (XRD) analysis, may be 50 to 80.

To measure the peak intensity, the XRD analysis may be performed on an outer surface of the cathode active material layer 110 that faces a coating surface of the cathode current collector 105. I(003) and I(006) may be the peak intensities of the (003) plane and the (006) plane, respectively, in the X-ray diffraction pattern of the cathode active material layer 110, measured after forming a coin half-cell including the cathode 100 according to the above-described embodiments and a lithium counter electrode, and performing two charge and discharge cycles on the coin half-cell each in a voltage range of 2 V to 4.6 V (e.g., after activation).

For example, the XRD analysis may be performed after conducting a cycle of CC/CV charging (0.1C constant current, CC section CUT-OFF condition: 4.6V, CV section CUT-OFF condition: 0.05C) and CC discharging (0.1C constant current, 2.0V CUT-OFF) twice at 25 °C for a coin half-cell (preliminary cell) before activation.

I(003) may reflect the stability of the crystal structure (e.g., layered structure) of the cathode active material according to embodiments of the present disclosure. For example, I(003) may indicate high crystallinity of the cathode active material. However, the I(003)/I(006) peak intensity ratio determined in the present disclosure may not be measured from the state of the active material, but from the state of the cathode active material layer 110. Therefore, distortion of the XRD measurement value due to preferred orientation may occur during processes such as drying and pressing for preparing the cathode active material layer 110.

According to embodiments of the present disclosure, by dividing I(003) by I(006), numerical distortion due to the preferred orientation may be corrected or buffered. Therefore, the crystal characteristics in the state of the cathode active material layer 110 may be evaluated and utilized with high reliability.

In the I(003)/I(006) peak intensity ratio range of 50 to 80, for example, sufficient crystallinity of the second cathode active material particles may be ensured, thereby preventing manganese dissolution and precipitation, and effectively suppressing voltage drop during repeated charge and discharge cycles. In addition, the resistance of the cathode active material layer 110 may be reduced, and sufficient rate characteristics of the secondary battery may be ensured.

In some embodiments, the I(003)/I(006) peak intensity ratio may be 55 to 80, 55 to 75, or 60 to 75. Within the above range, rate characteristic improvement and voltage enhancement prevention may be more effectively implemented.

In exemplary embodiments, the loading weight per unit area of the cathode active material layer 110 (e.g., per unit area of the cathode current collector 105) may be adjusted to a range of 10 mg/cm² to 30 mg/cm², 12 mg/cm² to 28 mg/cm², or 15 mg/cm² to 25 mg/cm². Within the above range, the energy density per volume of the lithium secondary battery (battery cell) may be sufficiently ensured while maintaining the battery output.

For example, if the loading weight is excessively reduced, the energy density may decrease. If the loading weight is excessively increased, the cell output may decrease.

Hereinafter, a method of preparing the above-described cathode active material for a lithium secondary battery is provided. According to embodiments of the present disclosure, the second cathode active material particles may be prepared by the method described below.

FIG. 2 is a flowchart describing the method of preparing a cathode active material for a lithium secondary battery according to exemplary embodiments.

Referring to FIG. 2, an active material precursor may be prepared by reacting metal sources for the active material (e.g., process S10). The metal sources for the active material may include a manganese source and a nickel source. In one embodiment, the metal source for the active material may further include a cobalt source.

Examples of the nickel source may include nickel sulfate (NiSO₄), nickel hydroxide (Ni(OH)₂), nickel nitrate (Ni(NO₃)₂), nickel acetate (Ni(CH₃CO₂)₂), and hydrates thereof. Examples of the manganese source may include manganese sulfate (MnSO₄), manganese hydroxide (Mn(OH)₂), manganese nitrate (Mn(NO₃)₂), manganese acetate (Mn(CH₃CO₂)₂), and hydrates thereof. Examples of the cobalt source may include cobalt sulfate (CoSO₄), cobalt hydroxide (Co(OH)₂), cobalt nitrate (Co(NO₃)₂), cobalt carbonate (CoCO₃), and hydrates thereof.

In one embodiment, nickel sulfate, manganese sulfate and cobalt sulfate may be used as the nickel source, manganese source and cobalt source, respectively.

According to exemplary embodiments, the above-described active material sources may be mixed and allowed to react, for example, through a co-precipitation method, to obtain an active material precursor. For example, the active material precursor may be prepared in the form of nickel-manganese hydroxide or nickel-manganese-cobalt hydroxide.

A precipitant and/or a chelating agent may be used to promote the above-described co-precipitation reaction. The precipitant may include an alkaline compound such as sodium hydroxide (NaOH), sodium carbonate (Na₂CO₃), etc. The chelating agent may include, for example, ammonium hydroxide, ammonium carbonate, etc.

In some embodiments, a source of an element represented by M in Formula 1 (a source containing M) may be introduced together with the metal sources for the active material.

The metal sources for the active material may be mixed and allowed to react so as to satisfy the content ratio (mole ratio) described with reference to Formula 1.

The active material precursor may be mixed with a lithium source to prepare a mixture (e.g., process S20). In exemplary embodiments, the active material precursor and the lithium source may be mixed using a dry high-speed mixer. The lithium source may be added at a predetermined mixing ratio relative to the active material precursor so as to satisfy the Li/Me ratio described above.

The lithium source may include, for example, lithium carbonate (Li₂CO₃), lithium nitrate (LiNO₃), lithium acetate (CH₃COOLi), lithium oxide (Li₂O), lithium hydroxide (LiOH), etc. These may be used alone or in combination of two or more thereof. In one embodiment, lithium hydroxide may be used as the lithium source.

In some embodiments, the M-containing source may also be mixed with the lithium source.

A first calcination may be performed on the mixture to form preliminary active material particles (e.g., process S30).

According to embodiments of the present disclosure, the first calcination may be performed at a temperature of 900 °C or higher. In one embodiment, the first calcination may be performed at a temperature in the range of 900 °C to 1,050 °C, 900 °C to 1,000 °C, 910 °C to 950 °C, 920 °C to 950 °C, or 920 °C to 940 °C.

Through the first calcination, the mixture may be heat-treated at a sufficiently high temperature to prevent the formation of secondary particles and induce sufficient growth of primary particles, thereby forming preliminary active material particles in the form of single particles.

A second calcination may be performed on the preliminary active material particles to form cathode active material particles (e.g., process S40).

According to embodiments of the present disclosure, the second calcination may be performed at a lower temperature than that of the first calcination. According to exemplary embodiments, the second calcination may be performed at a temperature of 880 °C or lower.

The second calcination may be performed at a relatively low temperature to further enhance crystallinity while suppressing additional particle growth. In some embodiments, the temperature of the second calcination may be 750 °C to 880 °C, 800 °C to 870 °C, 810 °C to 860 °C, 830 °C to 860 °C, or 840 °C to 860 °C.

Within the above temperature range, excessive particle growth may be more effectively suppressed, while improving the crystal characteristics.

The second calcination may be performed for a longer duration than the first calcination. In some embodiments, the first calcination may be performed for less than 8 hours. The second calcination may be performed for 8 hours or more, for example, 9 hours or more, 10 hours or more, 13 hours or more, or 18 hours or more.

After the second calcination, the cathode active material particles may be naturally cooled to, for example, room temperature, and then pulverized and classified.

According to some embodiments, after the second calcination, impurities such as LiOH, Li₂CO₃, etc. remaining on the surface of the cathode active material particles may be removed by washing with an aqueous or organic solvent.

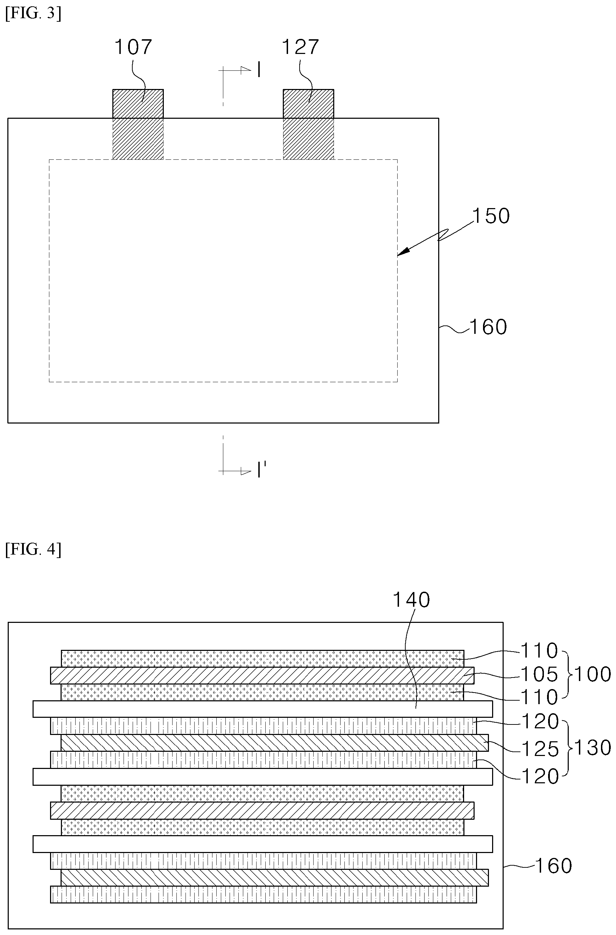

FIGS. 3 and 4 are schematic plan and cross-sectional views illustrating a lithium secondary battery according to exemplary embodiments, respectively. FIG. 4 is a cross-sectional view taken along the line I-I' of FIG. 3 in the thickness direction of the battery.

FIGS. 3 and 4 provide an exemplary lithium secondary battery for convenience of illustration, and the lithium secondary battery of the present disclosure is not limited to the structures shown in FIGS. 3 and 4.

Referring to FIGS. 3 and 4, the lithium secondary battery may include an electrode assembly 150 including the cathode 100 and the anode 130. The electrode assembly 150 may further include a separation membrane 140. A plurality of cathodes 100 and a plurality of anodes 130 may be laminated with the separation membrane 140 interposed therebetween to form the electrode assembly 150. The electrode assembly 150 may be accommodated in a case 160 together with an electrolyte to be impregnated.

The cathode 100 may include the cathode for a lithium secondary battery according to embodiments of the present disclosure described above with reference to FIG. 1.

The anode 130 may include an anode current collector 125 and an anode active material layer 120 formed on at least one surface of the anode current collector 125. The anode active material layer 120 may include an anode active material.

Non-limiting examples of the anode current collector 125 may include a copper foil, a nickel foil, a stainless steel foil, a titanium foil, a nickel foam, a copper foam, a polymer substrate coated with a conductive metal and the like. The anode current collector 125 may have a thickness of 10 µm to 50 µm, for example.

As the anode active material, any material known in the related art, so long as it can intercalate and deintercalate lithium ions, may be used without particular limitation thereof. For example, carbon-based materials such as crystalline carbon, amorphous carbon, carbon composites, carbon fibers, etc., a lithium alloy, a silicon-containing material, or a tin-containing material may be used.

Examples of the amorphous carbon may include hard carbon, soft carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx (0<x<2), a metal-doped SiOx (0<x<2), a silicon-carbon composite, etc. The metal may include lithium and/or magnesium, and the metal-doped SiOx (0<x<2) may include a metal silicate.

In some embodiments, an anode slurry may be prepared by mixing and stirring the anode active material with a binder, a conductive material and/or a dispersant in a solvent. The anode slurry may be applied to at least one surface of the anode current collector, and then dried and roll-pressed to prepare the anode 130.

As the binder and conductive material, materials substantially the same as or similar to the binder and conductive material included in the cathode may be used. In some embodiments, as the anode binder, a styrene-butadiene rubber (SBR)-based binder, carboxymethyl cellulose (CMC), polyacrylic acid-based binder, poly(3,4-ethylenedioxythiophene (PEDOT)-based binder, and the like may be used.

In some embodiments, the separation membrane 140 may be interposed between the cathode 100 and the anode 130. The separation membrane 140 may include a porous polymer film or a porous nonwoven fabric.

The porous polymer film may include a polyolefin polymer, such as an ethylene polymer, a propylene polymer, an ethylene/butene copolymer, an ethylene/hexene copolymer, and an ethylene/methacrylate copolymer.

The porous nonwoven fabric may include glass fibers having a high melting point, polyethylene terephthalate fibers, etc. The separation membrane 140 may also include a ceramic-based material. For example, inorganic particles may be applied to the polymer film or dispersed within the polymer film to improve heat resistance.

According to exemplary embodiments, an electrode cell is defined by the cathode 100, the anode 130 and the separation membrane 140, and a plurality of electrode cells are stacked to form, for example, the electrode assembly 150. The electrode assembly 150 may be of a winding type, a stacking type, a z-folding type, or a stack-folding type.

The electrode assembly 150 may be accommodated in the case 160 together with the electrolyte to define the lithium secondary battery. According to exemplary embodiments, a non-aqueous electrolyte may be used as the electrolyte.

The non-aqueous electrolyte may include a lithium salt of an electrolyte and an organic solvent. The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfuroxide, acetonitrile, dimethoxyethane, diethoxyethane, vinylene carbonate, sulfolane, gamma-butyrolactone, propylene sulfite and tetrahydrofuran, etc. may be used. These may be used alone or in combination of two or more thereof.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 150 and the anode 100 in place of the above-described separation membrane.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇₋xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIG. 3, electrode tabs (a cathode tabs and an anode tabs) may protrude from each cathode current collector 105 and each anode current collector 125, respectively, which belong to each electrode cell, and may extend to one end portion of the case 160. The electrode tabs may be fused together with the one end portion of the case 160 to be connected with electrode leads (a cathode lead 107 and an anode lead 127) that extend or are exposed to the outside of the case 160.

In FIG. 3, the cathode lead 107 and the anode lead 127 are shown to protrude from an upper side of the case 160 in a planar direction, but positions of these electrode leads are not limited thereto. For example, the electrode leads may protrude from at least one of both sides of the case 160, or may protrude from a lower side of the case 160. Alternatively, the cathode lead 107 and the anode lead 127 may be formed to protrude from different sides of the case 160, respectively.

The lithium secondary battery may be manufactured, for example, in a cylindrical shape using a can, a prismatic shape, a pouch shape or a coin shape.

### Examples and Comparative Examples

### (1) Preparation of cathode active material

### Preparation of first cathode active material particles (first particles: A, B and C)

NiSO₄ and MnSO₄ were added to distilled water and mixed to satisfy the chemical compositions of particles A, B and C described in Table 2. The distilled water was used after dissolved oxygen was removed by bubbling nitrogen (N₂) through it for 24 hours.

Thereafter, the mixed solution was introduced into a reactor at 60 °C, NH₄OH was added to the reactor, and the mixture was stirred at a constant speed to prepare a transition metal solution. NaOH was then added to the reactor at a constant speed so that the molar ratio of the transition metal to NaOH in the transition metal solution was 1:2. Thereafter, a co-precipitation reaction was performed to prepare an active material precursor in the form of a hydroxide.

Lithium hydroxide as a lithium source and the active material precursor were introduced into a dry high-speed mixer, and uniformly mixed for about 5 minutes to prepare a mixture. The input molar ratio of lithium hydroxide was adjusted so that the Li/Me ratio matched the value described in Table 2.

The mixture was placed in a calcination furnace, heated to 900 °C at a heating rate of 2 °C/min, and maintained at 900 °C for a predetermined period of time. During the calcination, oxygen was continuously supplied at a flow rate of 10 mL/min. After completion of the calcination, the mixture was naturally cooled to room temperature, and then pulverized and classified to prepare first cathode active material particles in the form of secondary particles.

The median particle diameter of the prepared first cathode active material particles was measured as the particle diameter corresponding to the 50% point of the volume-based particle size distribution obtained by the laser diffraction method (Microtrac, MT 3000).

### Preparation of second cathode active material particles (second particle: D)

NiSO₄, CoSO₄ and MnSO₄ were added to distilled water and mixed to satisfy the chemical composition of particle D described in Table 2. The distilled water was used after dissolved oxygen was removed by bubbling nitrogen (N₂) through it for 24 hours.

Thereafter, the mixed solution was introduced into a reactor at 60 °C, NH₄OH was added to the reactor, and the mixture was stirred at a constant speed to prepare a transition metal solution. NaOH was then added to the reactor at a constant speed so that the molar ratio of the transition metal to NaOH in the transition metal solution was 1:2. Thereafter, a co-precipitation reaction was performed to prepare an active material precursor in the form of a hydroxide.

Lithium hydroxide as a lithium source and the active material precursor were introduced into a dry high-speed mixer, and uniformly mixed for about 5 minutes to prepare a mixture. The input molar ratio of lithium hydroxide was adjusted so that the Li/Me ratio matched the value described in Table 2.

The mixture was placed in a calcination furnace, heated to 980 °C at a heating rate of 2 °C/min, and maintained at 980 °C for 7 hours to perform the first calcination. Thereafter, the calcination temperature was decreased to 830 °C and the second calcination was performed for 12 hours.

After completion of the calcination, the mixture was naturally cooled to room temperature, and then pulverized and classified to prepare second cathode active material particles in the form of single particles. The median particle diameter of the prepared second cathode active material particles was measured as the particle diameter corresponding to the 50% point of the volume-based particle size distribution obtained by the laser diffraction method (Microtrac, MT 3000).

### Preparation of second cathode active material particles (second particle: E)

Second cathode active material particles (E) were prepared by performing the same process as the preparation process of particle D, except that NiSO₄ and MnSO₄ were used to satisfy the chemical composition of particle E described in Table 2, and a single calcination process was performed at a temperature of 980 °C for 8 hours.

### Manufacture of second cathode active material particles (second particle: F, G)

Particles F and G were prepared in the same manner as particle D, except that the contents of metal sources were adjusted to satisfy the chemical compositions and Li/Me ratios of the particles described in Table 2.

### (2) Manufacture of secondary battery (coin half-cell)

The above-described cathode active material particles were mixed as described in Table 2 to prepare cathode active materials according to the examples and comparative examples. The cathode active material, carbon black, and PVDF were dispersed in N-methyl-2-pyrrolidone (NMP) at a weight ratio of 92:5:3 to prepare a cathode slurry.

The cathode slurry was applied to an aluminum foil (thickness: 20 µm), then dried and roll-pressed to fabricate a cathode. Lithium metal (thickness: 0.4 mm) was used as the counter electrode (anode).

The cathode and anode were laminated by notching them into circular shapes having a diameter of Φ14 and Φ16, respectively, and a separation membrane (PE, thickness: 13 µm) notched into Φ19 was interposed between the cathode and the anode to form an electrode assembly.

The electrode assembly was placed in a coin cell case (2016 standard), and an electrolyte was injected into the coin cell case to manufacture a preliminary lithium secondary battery.

The electrolyte used herein was prepared by dissolving 1M LiPF₆ solution in a mixed solvent of EC/EMC (30/70, v/v).

The preliminary lithium secondary battery was subjected to CC/CV charging (0.1C constant current, CC section CUT-OFF condition: 4.6V, CV section CUT-OFF condition: 0.05C) and CC discharging (0.1C constant current, 2.0V CUT-OFF) at 25 °C. The charging and discharging were repeated twice to obtain an activated lithium secondary battery.

### Evaluation Example

### (1) Measurement of XRD peak ratio

The lithium secondary batteries of the examples and comparative examples were disassembled to obtain the cathodes, and the cathode active material layers were analyzed by X-ray diffraction (XRD).

The XRD analysis equipment and conditions are as described in Table 1 below.

**[TABLE 1]**

| XRD(X-Ray Diffractometer) (EMPYREAN) | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 - 120° |
| Scan Step Size | 0.0065° |
| Divergence slit | 1/4° |
| Antiscatter slit | 1/2° |

From the obtained XRD pattern, the intensity of the (006) plane peak (observed at 2θ 36° to 38°) and the intensity of the (003) plane peak (observed at 20 17° to 19°) were measured, and the I(003)/I(006) peak intensity ratio was calculated.

### (2) Evaluation of rate characteristics

The coin half-cells of the examples and comparative examples were charged and discharged under 0.1 C conditions, and then the discharge capacity X was measured. Thereafter, the cells were charged at 0.1 C and discharged at 1.0 C to measure the discharge capacity Y.

The percentage of discharge capacity Y relative to discharge capacity X (Y/X × 100%) was calculated to evaluate the rate characteristics.

### (3) Evaluation of high-temperature voltage drop

The lithium secondary batteries of the examples and comparative examples were subjected to CC/CV charging (1C, upper limit voltage 4.5V CUT-OFF) and CC discharging (1C, 2.0V CUT-OFF) at 45 °C. The charging and discharging were repeated for 100 cycles.

The average discharge voltages of the 1st and 100th cycle discharge profiles were calculated, and the absolute value of the difference between the average discharge voltages was determined.

The evaluation results are described together in Table 2 below.

**[TABLE 2]**

| | First particle | Second particle | First particle content (wt%) | Second particle content (wt%) | I(003)/I (006) peak intensit y ratio | Rate characte ristics | Voltage drop |
|---|---|---|---|---|---|---|---|
| Example 1 | A | D | 60 | 40 | 74.45 | 86% | 103 mV |
| Example 2 | A | E | 60 | 40 | 61.85 | 80% | 107 mV |
| Example 3 | B | D | 70 | 30 | 63.72 | 87% | 109 mV |
| Example 4 | B | E | 70 | 30 | 53.13 | 81% | 113 mV |
| Example 5 | A | D | 80 | 20 | 52.37 | 88% | 115 mV |
| Example 6 | A | E | 80 | 20 | 45.28 | 82% | 119 mV |
| Comparativ e Example 1 | B | D | 90 | 10 | 38.48 | 89% | 141 mV |
| Comparativ e Example 2 | B | E | 90 | 10 | 33.86 | 85% | 144 mV |
| Comparativ e Example 3 | B | - | 100 | 0 | 28.94 | 91% | 152 mV |
| Comparativ e Example 4 | - | D | 0 | 100 | 140.5 | 73% | 48 mV |
| Comparativ e Example 5 | - | E | 0 | 100 | 117.8 | 27% | 76 mV |
| Comparativ e Example 6 | C | E | 20 | 80 | 100.3 | 37% | 91 mV |
| Comparativ e Example 7 | C | D | 50 | 50 | 91.59 | 75% | 97 mV |
| Comparativ e Example 8 | C | E | 50 | 50 | 81.33 | 78% | 101 mV |
| Comparativ e Example 9 | A | F | 70 | 30 | Unmeas ured | 92% | 98 mV |
| Comparativ e Example 10 | A | G | 70 | 30 | Unmeas ured | 74% | 204 mV |
| First particle A: Li_{1.11}Ni_{0.35}Mn_{0.54}O₂ (Li/Me molar ratio = 1.25, Median particle diameter (D50): 12 µm, Large-diameter secondary particle) | | | | | | | |
| First particle B: Li_{1.16}Ni_{0.27}Mn_{0.57}O₂ (Li/Me molar ratio = 1.38, Median particle diameter (D50): 10 µm, Large-diameter secondary particle) | | | | | | | |
| First particle C: Li_{1.14}Ni_{0.30}Mn_{0.56}O₂ (Li/Me molar ratio = 1.31, Median particle diameter (D50): 6 µm, Large-diameter secondary particle) | | | | | | | |
| Second particle D: Li_{1.16}Ni_{0.27}Co_{0.02}Mn_{0.55}O₂ (Li/Me molar ratio = 1.39, Median particle diameter (D50): 3 µm, Small-diameter single particle, multi-stage calcination) | | | | | | | |
| Second particle E: Li_{1.16}Ni_{0.28}Mn_{0.56}O₂ (Li/Me molar ratio = 1.39, Median particle diameter (D50): 3 µm, Small-diameter single particle, single calcination) | | | | | | | |
| Second particle F: Li_{1.02}Ni_{0.48}Mn_{0.50}O₂ (Li/Me molar ratio = 1.04, Median particle diameter (D50): 3 µm, Small-diameter single particle, single calcination) | | | | | | | |
| Second particle G: Li_{1.21}Ni_{0.19}Mn_{0.60}O₂ (Li/Me molar ratio = 1.53, Median particle diameter (D50): 3 µm, Small-diameter single particle, single calcination) | | | | | | | |

Referring to Table 2, in the examples, where a cathode active material having a Li/Me ratio in the range of 1.1 to 1.5 and including a mixture of the first cathode active material particles and the second cathode active material particles at a predetermined ratio was used, overall improvements in rate characteristics and a reduction in voltage drop were observed.

In examples 2, 4 and 6, where the second cathode active material particles (second particle E) prepared through a single calcination process were used, the measured voltage drop values were slightly increased.

In addition, in example 6, which had an I(003)/I(006) peak intensity ratio of less than 50, the voltage drop further increased.

In comparative examples 1 to 3, where the second cathode active material particles were not used or were mixed in excessively small amounts, the voltage drop values significantly increased.

In comparative examples 4 to 8, where the first cathode active material particles were not used or were included in excessively small amounts, the rate characteristics significantly deteriorated.

In Comparative Example 9, where the Li/Me ratio was less than 1.1, the discharge capacity X was reduced by 8% or more compared to Examples 1 and 3 during the rate characteristic evaluation. In Comparative Example 10, where the Li/Me ratio exceeded 1.5, the voltage drop increased excessively.

## Claims

1. A cathode for a lithium secondary battery comprising:
a cathode current collector; and
a cathode active material layer disposed on the cathode current collector and comprising first cathode active material particles in the form of secondary particles and second cathode active material particles in the form of single particles,
wherein each of the first cathode active material particles and the second cathode active material particles comprises a lithium-manganese-containing oxide, and a ratio of the number of moles of lithium to the number of moles of elements excluding lithium and oxygen in the lithium-manganese-containing oxide, represented by Li/Me, is 1.1 to 1.5, and
a weight ratio of the first cathode active material particles to the total weight of the first and second cathode active material particles is greater than 0.5 and less than 0.9.

2. The cathode for a lithium secondary battery according to claim 1, wherein the weight ratio of the first cathode active material particles to the total weight of the first and second cathode active material particles is 0.55 to 0.85.

3. The cathode for a lithium secondary battery according to claim 1 or 2, wherein each of the first cathode active material particles and the second cathode active material particles comprises a lithium-nickel-manganese-containing oxide in which a molar ratio of manganese (Mn) is greater than that of nickel (Ni).

4. The cathode for a lithium secondary battery according to any one of claims 1 to 3, wherein the Li/Me ratio is 1.15 to 1.5.

5. The cathode for a lithium secondary battery according to any one of claims 1 to 4, wherein the Li/Me ratio is 1.2 to 1.5.

6. The cathode for a lithium secondary battery according to any one of claims 1 to 5, wherein a median particle diameter (D50) of the first cathode active material particles is greater than that of the second cathode active material particles.

7. The cathode for a lithium secondary battery according to claim 6, wherein the first cathode active material particles have a median particle diameter (D50) of 8 µm to 20 µm, and the second cathode active material particles have a median particle diameter (D50) of 1 µm to 7 µm.

8. The cathode for a lithium secondary battery according to any one of claims 1 to 7, wherein the lithium-manganese-containing oxide further contains cobalt in a molar ratio of 0 to 0.05 among the elements excluding oxygen.

9. The cathode for a lithium secondary battery according to any one of claims 1 to 8, wherein an I(003)/I(006) peak intensity ratio measured from a surface of the cathode active material layer by X-ray diffraction (XRD) analysis is 50 to 80, and
wherein I(003) is a peak intensity of a (003) plane measured by the XRD analysis, and I(006) is a peak intensity of a (006) plane measured by the XRD analysis.

10. The cathode for a lithium secondary battery according to claim 9, wherein I(003) and I(006) are the peak intensities of the (003) plane and the (006) plane, respectively, in the X-ray diffraction pattern of the cathode active material layer, measured after forming a coin half-cell including the cathode for a lithium secondary battery and a lithium counter electrode, and performing two charge and discharge cycles on the coin half-cell each in a voltage range of 2 V to 4.6 V.

11. The cathode for a lithium secondary battery according to claim 10, wherein the I(003)/I(006) peak intensity ratio is 55 to 75.

12. The cathode for a lithium secondary battery according to any one of claims 1 to 11, wherein the lithium-manganese-containing oxide has a chemical structure or a crystal structure represented by Formula 1 below:
[Formula 1] Liₐ[MₓNi_{y}Mn_{z}]O_{b}
(in Formula 1, M comprises at least one element of Co, Ca, Mg, V, Ti, Al, Fe, Ru, Zr, W, Sn, Sr, Ir, Nb, Mo, Cu, Zn, Cr, Ga and Bi, and
0≤x≤0.9, 0≤y≤0.9, x+y>0, 0.1≤z≤0.9, 1.8≤a+x+y+z≤2.2, and 1.1≤a/(x+y+z)≤1.5, 1.8≤b≤2.2).

13. A lithium secondary battery comprising:
the cathode for a lithium secondary battery according to any one of claims 1 to 12; and
an anode disposed opposite to the cathode.

14. A method of preparing a cathode active material for a lithium secondary battery comprising:
preparing a mixture of an active material precursor and a lithium source;
performing a first calcination on the mixture at a temperature of 900 °C or higher to form preliminary active material particles; and
performing a second calcination on the preliminary active material particles at a temperature lower than that of the first calcination and for a longer duration to form cathode active material particles.

15. The method of preparing a cathode active material for a lithium secondary battery according to claim 14, wherein the temperature of the second calcination is 750 °C to 880 °C.
